# EUROPEAN PATENT APPLICATION

(11) **EP 2 860 893 A1**
(43) Date of publication of application: **15.04.2015**
(21) Application number: 13306399.0
(22) Date of filing: 10.10.2013

(54) **Sensor information communcation layer**

(71) Applicant: Thomson Licensing, 92130 Issy-les-Moulineaux (FR)
(72) Inventor: Pearce, Mike, 1930 Zaventem (BE)
(74) Representative: Lindemann, Robert

(57) **Abstract**

A simplified yet flexible method of controlling networked appliances of any kind without putting a high computational load on a controlling device for converting protocols or running appliance-specific control applications or programs is provided. A networked control entity receives, from a networked appliance, a first type message that is composed of a unique identifier for identifying the networked appliance and at least one additional first data item defining the networked appliance's capability through a limited set of attributes representing one or more meters, events, switches and/or signals.
The networked control entity transmits a second type message to the networked appliance for controlling the networked appliance, wherein the second type message is composed of the appliance's unique identifier and at least one additional second data item addressing a capability of the networked appliance.

## Description

### Field

The present invention generally relates to the interoperability of computer systems, and more specifically to a generic interface and communication layer to publish information relating to signal, sensor, and switching type devices.

### Background

Machine to Machine (M2M) refers to technologies that allow both wireless and wired systems to communicate with other devices of the same type. M2M can include the case of industrial instrumentation, where a device (such as a sensor or meter) is used to capture an event (such as temperature, inventory level, etc.), which is relayed through a network (wireless, wired or hybrid) to an application (software program) that translates the captured event into meaningful information.

For example, applications such as Personal Health Monitoring, intelligent tracking and tracing in the supply chain, smart utility metering, remote control of vending machines, industrial wireless automation and ambient assisted living are made possible by Machine to Machine (M2M) communications.

Modern M2M communication has expanded beyond a one-to-one connection and changed into a system of networks that transmits data to personal appliances. The expansion of IP (internet protocol) networks across the world has made it far easier for M2M communication to take place and has reduced the amount of power and time necessary for information to be communicated between machines. These networks also allow a plurality of new business opportunities and connections between consumers and producers in terms of the products being sold.

In the domain of Machine to Machine, most architectures rely upon a communication layer in which sensor devices communicate information items to other elements such as application servers. M2M devices, such as sensors, residing in the M2M device domain communicate directly or indirectly via a M2M gateway with other elements such as a M2M core (network domain) and M2M applications. M2M devices are capable of replying to requests for data contained within those devices or are capable of transmitting data autonomously. A M2M area network (device domain) provides connectivity between M2M devices and M2M gateways, e.g. personal area networks. M2M gateways use M2M capabilities to ensure M2M devices inter-working and interconnection to the communication network. M2M gateways are IP enabled gateways that communicate sensor information on behalf of connected non-IP sensor devices (e.g. Zigbee, ZWave, DECT ULE, Low Power Bluetooth). M2M communication networks (network domain) enable communication between M2M gateways and M2M applications (e.g. xDSL, LTE, WiMAX, and WLAN). M2M applications contain the middleware layer where data is processed in various application services and is used by the specific business-processing engines.

For such sensor information communication, a number of entities and standardization bodies started defining extensive information models for each type of sensor. For example, ECHONET CONSORTIUM published a document "Detailed Requirements for ECHONET Device objects", Sept. 13, 2012, Release A, containing a very long list of sensor application programming interfaces (API's). The referenced document is an illustration of the ever increasing number of types of sensor devices and related information model definitions.

As can be seen, existing M2M solutions are highly fragmented and typically dedicated to a single application (e.g. fleet management, meter reading, vending machines). The multitude of technical solutions and dispersed standardization activities result in the slow development of the global M2M market. Therefore, standardization is a key enabler and currently still a problem yet to be overcome to remove the technical barriers and ensure interoperable M2M services and networks.

Prior art approaches to overcome this problem include, for example, the publication "System Approach to Distributed Sensor Management", Greg Maycott et al., Proc. of SPIE Vol. 7707, 770701-1 to 770701-9, 2010, where a distributed sensor management frame work and its application to a tactical sensor network is described (see Abstract). A concept for a sensor capabilities description (SCD) is described under section 2.1 where the SCD is expressed as an XML document that can be exchanged either over the wire during runtime or in a pre-operation phase. A complete SCD is a rich document containing as elements: traits, properties, commands, needs and generates. The SCD is the unifying component of the three different layers (sensor management layer, sensor information management layer, sensor enterprise layer) of the sensor management system integration framework. Each layer exchanges the SCDs of the available assets with the other layers through the established interfaces und uses the SCDs in unique and prescribed ways to accomplish their mission tasks.

In the publication "System Abstraction Layer: a unique software interface to effectively manage sensor networks", Gilles Gigan, et al., IEEE 2007, 1-4244-1502-0/07, pages 479-484, a Sensor Abstraction Layer (SAL) is disclosed that provides instrument middleware architectures with a consistent and uniform view of heterogeneous sensor networks regardless of the technologies involved. SAL is designed to run on sensor gateways and aggregates multiple sensing technologies. The many hardware disparities and specificities related to accessing, probing and piloting heterogeneous sensors are hidden and abstracted by SAL, which in turn offers a single, stable and hardware-independent interface to manage the entire network (see Abstract).

US Patent Number 8,276,159 B2 is directed to a service that reads sensors, and that communicates information based on the sensor readings to applications. The service may use a sensor interface to read the value of sensors, and may receive subscriptions to sensor values from other programs. The service may then generate messages that contain the sensor value, and may provide these messages to programs that have subscribed to the messages (see Abstract).

US Patent Number 7,149,660 B2 is directed to a method and apparatus for standardizing an interface infrastructure between sensor devices and client applications. The apparatus comprises a Sensor Application Integration Framework (SAIF) in the form of an application program interface (API) transport layer between sensor devices and client applications. Sensor services are registered in the SAIF API as interface definitions, and the client applications search the interface definitions corresponding to desired sensor services. An interactive handshake of messages and data between client applications and sensor services is implemented via the SAIF API by means of standard communication protocols such as XML. The SAIF API abstracts the details of the underlying sensor hardware from the client application, and can therefore function as a standard interface for sensor simulation, for sensor emulation, and for an active sensor device (see Abstract).

Furthermore, sensors and switches connected through a network will need to communicate to a central unit, which receives data from and sends commands to the sensors and switches, and which processes and provides access to the data. Known prior art sensors typically identify themselves through an ID (identification), which the central unit looks up in a database for learning how to use the sensor and switch. Such database needs to be over-complete, i.e. must contain information on all kinds of devices known, irrespective of whether or not any particular kind of device is present in the network. Thus, the database is unnecessarily large and prone to be outdated. Maintaining such database to be up to date is tedious and time consuming.

### Summary

The problem behind the present invention is to provide a generic interface and communication layer to publish information relating to networked appliances such as signal, sensor and switching type devices.

Based on this problem, it is an object of the invention to provide a simplified yet flexible method of controlling networked appliances of any kind without putting a high computational load on a controlling device for converting protocols or running appliance-specific control applications or programs. The problem is solved and the object is achieved by the present invention through taking an approach for conveying or communicating sensor information that is different from the known prior art by modeling any type of sensor as a combination of sets of events, signals, switches and/or meters.

The present invention is directed to representing each networked (network-connected) appliance as a combination of events, signals, switches and/or meters. The networked appliance, once it is in communication with the central unit (networked control entity), announces its capabilities and a name, under which it can be addressed. For example, a power switch announces itself as "power switch" and its capabilities as "on, off". If the switch is a regulator, it could announce itself as "power switch", and its capabilities as "0% ... 100%", or as a voltage or current range within which the regulator can operate. If the networked appliance is a sensor the sensor tells the central unit what it senses, which unit, which range, and if it can be controlled. By having each networked appliance identify itself through a unique name and a set of capabilities the central unit need not maintain a lookup table of all kinds of appliances. This reduces the memory requirement. In addition, each networked appliance may be polled by the central unit under its name, or may provide status updates at predefined times, or may even send status changes only. The resulting system scales easily.

It is an advantage of embodiments of the present invention that the generic interface and communication layer is class less and does not depend on any standardization.

It is a further advantage of embodiments of the present invention that the generic interface and communication layer operates independently from any application programming interface (API).

It is a still further advantage of embodiments of the present invention that "components" that are common in multiple sensor types rather than "services" provided by the sensors are identified at the application level of a networked appliance. Accordingly, complex sensors are abstracted into a series of switches and gauges, the "components", rather than focusing upon what the sensor is doing, "service".

It is a still further advantage of embodiments of the present invention that the communication interface can be used to define any newly developed networked appliance and report on this new appliance without having to be extended for each new product that comes into production. The need for a document per sensor type is avoided.

According to the advantageous embodiments of the present invention, a method of controlling a networked appliance comprises a networked control entity receiving, from the networked appliance, a first type message, wherein the first type message is composed of a unique identifier for identifying the networked appliance and at least one additional first data item defining the networked appliance's capability through a limited set of attributes representing one or more meters, events, switches and/or signals. A user interface for controlling and/or monitoring the networked appliance is provided, wherein the content of the user interface is exclusively based on the first type message's content. The networked control entity transmits a second type message to the networked appliance for controlling the networked appliance, wherein the second type message is composed of the appliance's unique identifier and at least one additional second data item addressing a capability of the networked appliance, using only the attributes defined in the first type message received from the networked appliance, and wherein addressing the networked appliance's capability includes inquiring a status update or a transmitting a command to change a controllable attribute.

According to preferred embodiments of the present invention, the first type message is transmitted in the topmost layer of an open system interconnection (OSI)-compliant network.

According to preferred embodiments of the present invention the first type message represents a low-level abstraction of the networked appliance.

According to preferred embodiments of the present invention the networked control entity stores the first type message's content in a database in a retrievable manner.

According to preferred embodiments of the present invention the second type message is generated in accordance with a previous user input or machine input.

According to preferred embodiments of the present invention the networked appliance acknowledges a change in a controllable capability or responds to a status inquiry by transmitting a status message to the networked control entity.

According to preferred embodiments of the present invention the networked appliance transmits the first type message at least when being initially connected to a network.

According to preferred embodiments of the present invention the networked appliance transmits the first type message when the status of the networked appliance has changed.

According to preferred embodiments of the present invention a status change includes a change in the capability of the networked appliance and, therefore, a change in at least one of the attributes.

According to preferred embodiments of the present invention a networked appliance comprises a network interface, a processor, a program memory and/or a data memory, wherein the networked appliance is adapted to transmit a first type message to a networked control entity via the network interface, wherein the first type message is composed of a unique identifier for identifying the networked appliance and at least one additional first data item defining the networked appliance's capability through a limited set of attributes representing one or more meters, events, switches and/or signals, wherein a user interface for controlling and/or monitoring the networked appliance is provided, wherein the content of the user interface is exclusively based on the first type message's content, wherein the networked control entity transmits a second type message to the networked appliance for controlling the networked appliance, and wherein the second type message is composed of the appliance's unique identifier and at least one additional second data item addressing a capability of the networked appliance, using only the attributes defined in the first type message received from the networked appliance.

According to preferred embodiments of the present invention addressing the networked appliance's capability includes inquiring a status update or a transmitting a command to change a controllable attribute.

According to preferred embodiments of the present invention the networked control entity and the networked appliance each include a message parser for extracting the message content required for controlling the networked appliance and for providing a user interface.

According to preferred embodiments of the present invention the networked appliance comprises a signal, sensor, and switching type product/device.

According to preferred embodiments of the present invention the networked appliance transmits the first type message at least when being initially connected to a network.

According to preferred embodiments of the present invention the networked appliance transmits the first type message when the status of the networked appliance has changed, a status change including a change in the capability of the networked appliance and, therefore, a change in at least one of the attributes.

According to preferred embodiments of the present invention a computer program in a computer readable format comprises the software components for performing the method steps for controlling a networked appliance as stated above.

According to preferred embodiments of the present invention a non-transitory storage medium storing a computer program in a computer readable format comprises the software components for performing the method steps for controlling a networked appliance as stated above.

### Brief Description of the Drawings

The features and advantages of the invention will become clearer from the detailed description of some of the embodiments of the invention, which are provided purely by way of non-limiting example and with reference to the appended drawings, in which:

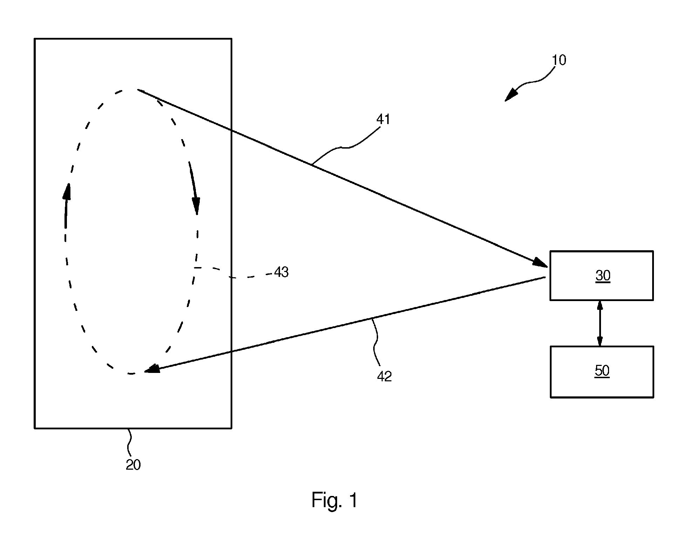

Fig.1 is a schematic diagram of a generic communication interface in accordance with an embodiment of the present invention.

### Detailed Description of Embodiments

Referring to Fig. 1, a schematic diagram of a generic communication system 10 is illustrated in accordance with preferred embodiments of the present invention. The communication system 10 can be used by any networked (network-connected) appliance (NA) 20 to communicate with a networked (network-connected) control entity (NCE) 30 and vice versa. The networked control entity 30 receives first type messages 41 from the networked appliance 20 and sends second type messages 42 to the networked appliance. The networked control entity 30 may be in communication with a plurality of networked appliances 20. The communication system 10 can be used to control the networked appliances 20.

The networked appliance 20 may be any signal, sensor, and switching type product/device. The networked appliance 20 further includes a network interface, a processor, a program memory and/or a data memory. The networked appliance 20 still further includes a message parser for extracting the message content of the second type message 42 required for controlling the networked appliance 20. The networked appliance 20 is adapted to transmit a first type message 41 message to the networked control entity 30. The networked appliance 20 transmits the first type message 41 at least when being initially connected to a network. The networked appliance 20 publishes its capabilities and properties using a low level, reduced protocol having only a limited number of descriptors including an event, a switch or an actuator, a meter, and a signal.

The networked control entity 30 stores the content of the first type message 41 in a database in a retrievable manner. The networked control entity 30 provides an interface for controlling and/or monitoring the networked appliance 20. The content of the interface for the networked appliance 20 is exclusively based on the content of the first type message 41. The networked control entity 30 includes a message parser for extracting the message content of the first type message 41 required for controlling the networked appliance 20 and for providing a user interface. The networked control entity 30 uses the information and data about the capabilities and properties of the networked appliance 20, which it receives via the first type message 41, for providing a corresponding U/I for controlling the appliance, for performing further processing on the data, or both.

The first type message 41 is composed of a unique identifier for identifying the networked appliance 20 and at least one additional first data item defining the capability of the networked appliance 20 through a limited set of attributes representing one or more meters, events, switches and/or signals. The first type message 41 is transmitted in the topmost layer of an OSI (open system interconnection)-compliant network. The first type message 41 represents a low-level abstraction of the networked appliance 20. The first type message 41 may include information and/or data relating to the identification, the capability, the attributes and the status (current state) of a networked appliance 20 as well as the ability to accept instructions to change the current status.

The second type message 42 is used for controlling the networked appliance 20. The second type message 42 is composed of the appliance's unique identifier and at least one additional second data item addressing a capability of the networked appliance 20, using only the attributes defined in the first type message 41 received from the networked appliance 20. Addressing the capability of the networked appliance 20 includes inquiring a status update or transmitting a command to change a controllable attribute. The second type message 42 can be generated in accordance with a previous user input or machine input via a user application 50. The second type message 42 may include information and or data for controlling and/or configuring the networked appliance 20.

The messages and data items may be transported via Message Queuing Telemetry Transport protocol (MQTT) using Java Script Object Notation (JSON). MQTT is a machine-to-machine connectivity protocol designed as an extremely lightweight publish/subscribe messaging transport. Alternative, Extensive Markup Language (XML) can be used instead of JSON.

The networked appliance 20 acknowledges a change in a controllable capability or responds to a status inquiry by transmitting a status message embedded into the first type message 41 to the networked control entity 30.

The networked appliance 20 may transmit a first type message 41 when the status of the networked appliance 20 has changed, a status change including a change in the capability of the networked appliance 20 and, therefore a change in at least one of the attributes.

Referring again to Fig. 1, the loop 43 at the networked appliance 20 indicates that the same status message (first type message 41) is used to reflect back any control message (second type message 42). The same status message is published in the time delayed loop 43 until a new control message is received. Networked appliances 20, which include signal, sensor, and switching type products/devices and which are connected through a network, communicate to a central unit, the networked control entity 30, which receives data from and sends commands to the networked appliances 20, and which processes and provides access to the data. The networked appliances 20 are capable of identifying themselves through an ID (identification).

In accordance with preferred embodiments of the present invention sensor information of the networked appliances are conveyed/communicated to the networked control entity 30 as a combination of sets of events, signals, switches, and meters. Accordingly, the communication system 10 in accordance with preferred embodiments of the present invention defines manufacturer specific sensors of a networked appliance 20 as a finite set of controllable attributes. The communication system 10 allows a developer to define each device as a collection of ingredients, the controllable attributes. The controllable attributes may include, but are not limited to, events, signals, switches, and meters.

Sensors come in many forms, such as, for example:
- Alarms: Smoke, Baby, Movement, panic, gas, rain/water etc.
- Measurement: Voltage, Amperage, level, vibration etc.
- Switches / Actuators: on-off, high-medium-low etc.
- Signals: Microphone, Speaker etc.

Of these, there are an infinite number of combinations that can appear in a given networked appliance 20. For instance, a power switch may come with or without metering of voltage, power, energy. In accordance with preferred embodiments of the present invention a communication system 10, which can be used by any networked appliance 20 to announce its capabilities, its current state, and its ability to accept instructions to change state and which further can be used to avoid a hard coded interface per appliance variant, is provided.

An event is a single state switch that is time-stamped to announce an alarm or occurrence in time of something. An event has a name to identify it and a time of occurrence.

A switch is multi state. The most common being two state. It has a name and each state has a name. When switched a time-stamped event is published to announce the name of the switch and its new state.

An actuator is similar to a switch in that it has a name and a set of states or positions.

Switches and actuators may also have a switched position that is measured by offset. Such an offset will be modeled as a meter in that it will have a name, a unit of measurement, a min and max and a current value.

A meter has a name, a unit of measurement, a min and max and a current value. Meters may also be accorded events that occur at designated measurement values.

An option is to extend this interface to also describe signals. A signal is a channel for analogue or digital data that is single or bi-directional. It has properties such as bandwidth and/or frequency.

The communication system 10 optionally supports actions to events whereby an event can trigger another. For example, the movement sensor may be asked to switch on an alarm bell. Therefore, a networked appliance 20 has capabilities regarding which actions it can support and which actions it is already programmed to support and whether these actions are configurable.

The networked appliance 20 publishes its capabilities in the form of the events, meters, signals and switches it supports and which of these may be changed through the communication system 10 with the networked control entity 30. The networked appliance 20 also describes any actions already configured. Exemplary communicated capabilities and attributes of exemplary networked appliance 20 are illustrated below.

### Example 1

A Power Switch capable of monitoring Power usage

```
 DeviceDescription:"Donalds Power Switch"
 {
 Capability:SWITCH, name="Power Switch", positions:"On, Off"
 Attribute: METER, name="Current" unit="Amps", min=0, max=500
 }
 DeviceMonitor:"Donalds Power Switch"
 {
 METER, name="Current", value=2.76
 }
 DeviceEvent:"Donalds Power Switch"
 {
 SWITCH, name="Power Switch", value="On"
 }
```

### Example 2

A Robot Arm Actuator

```
 DeviceDescription:"Robot Arm"
 {
 Capability:ACTUATOR, name="PositionX",unit="cms", min=0, max=60,
 currPosition=0
 Capability:ACTUATOR, name="PositionY",unit="cms", min=0, max=60,
 currPosition=0
 Capability:ACTUATOR, name="PositionZ",unit="cms", min=0, max=60,
 currPosition=0
 Capability:ACTUATOR, name="Hand", positions:"Open,Closed",
 currPosition="Open"
 }
```

### Example 3

A Burglar Alarm

```
 DeviceDescription:"Burglar Alarm"
 {
 Attribute: EVENT, name="MovementSensor", action:SWITCH,name="Alarm
 Bell", position="On"
 Capability:SWITCH, name="Alarm Bell", positions:"On,Off"
 Capability:METER, name="Alarm Off Timer", unit="minutes", min=0, max=30,
 currPosition=3, action:SWITCH,name="Alarm Bell",position:"Off"
 }
```

A generic communication system 10 connects at least one networked appliance 20 with a networked control entity 30. Software when executed on a processing engine such as a microprocessor or an FPGA can enable communication between them.

A computer program in a computer readable format can include the software components for enabling the communication between each networked appliance 20 and the networked control entity 30 as described above. Furthermore, a non-transitory storage medium storing a computer program in a computer readable format can include the software components for enabling the communication between each networked appliance 20 and the networked control entity 30 as described above.

Accordingly, the present invention provides a generic and simple interface for modeling information of any type of sensor rather than defining information models for an ever growing number of sensors. The infinite number of sensor types commercially available is reduced by using low-level abstractions. Therefore, the communication system 10 can be used to define any newly developed networked appliance 20 and report on this new appliance without having needing to be extended for each new product that comes into production.

While at least one exemplary embodiment has been presented in the foregoing summary and detailed description, it should be appreciated that a vast number of variations exist. It should also be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents.

## Claims

1. A method of controlling a networked appliance (20) comprising the steps of:
- a networked control entity (30) receiving, from the networked appliance (20), a first type message (41), wherein the first type message (41) is composed of a unique identifier for identifying the networked appliance and at least one additional first data item defining the networked appliance's capability through a limited set of attributes representing one or more meters, events, switches and/or signals;
- providing a user interface for controlling and/or monitoring the networked appliance, wherein the content of the user interface is exclusively based on the first type message's (41) content; and
- the networked control entity (30) transmitting a second type message (42) to the networked appliance (20) for controlling the networked appliance (20), wherein the second type message (42) is composed of the appliance's unique identifier and at least one additional second data item addressing a capability of the networked appliance (20), using only the attributes defined in the first type message (41) received from the networked appliance (20), and wherein addressing the networked appliance's capability includes inquiring a status update or a transmitting a command to change a controllable attribute.

2. The method according to claim 1, wherein the first type message (41) is transmitted in the topmost layer of an open system interconnection (OSI)-compliant network.

3. The method according to claims 1 or 2, wherein the first type message (41) represents a low-level abstraction of the networked appliance.

4. The method according to any of claims 1 to 3, wherein the networked control entity (30) stores the first type message's content in a database in a retrievable manner.

5. The method according to any of claims 1 to 4, wherein the second type message (42) is generated in accordance with a previous user input or machine input.

6. The method according to any of claims 1 to 5, wherein the networked appliance (20) acknowledges a change in a controllable capability or responds to a status inquiry by transmitting a status message to the networked control entity (30).

7. The according to any of claims 1 to 6, wherein the networked appliance (20) transmits the first type message (41) at least when being initially connected to a network.

8. The method according to any of claims 1 to 7, wherein the networked appliance (20) transmits the first type message (41) when the status of the networked appliance (20) has changed.

9. The method according to claim 8, wherein a status change includes a change in the capability of the networked appliance (20) and, therefore, a change in at least one of the attributes.

10. A networked appliance (20), comprising:
a network interface, a processor, a program memory and/or a data memory,
wherein the networked appliance (20) is adapted to transmit a first type message (41) to a networked control entity (30) via the network interface,
wherein the first type message (41) is composed of a unique identifier for identifying the networked appliance and at least one additional first data item defining the networked appliance's capability through a limited set of attributes representing one or more meters, events, switches and/or signals,
wherein a user interface for controlling and/or monitoring the networked appliance (20) is provided, wherein the content of the user interface is exclusively based on the first type message's content;
wherein the networked control entity (30) transmits a second type message (42) to the networked appliance (20) for controlling the networked appliance (20), and
wherein the second type message (41) is composed of the appliance's unique identifier and at least one additional second data item addressing a capability of the networked appliance, using only the attributes defined in the first type message (41) received from the networked appliance (20).

11. The networked appliance (20) according to claim 10, wherein addressing the networked appliance's capability includes inquiring a status update or a transmitting a command to change a controllable attribute.

12. The networked appliance (20) according to claims 10 or 11, wherein the networked control entity (30) and the networked appliance (20) each include a message parser for extracting the message content required for controlling the networked appliance (20) and for providing a user interface.

13. The networked appliance (20) according to any of claims 10 to 12, wherein the networked appliance (20) comprises a signal, sensor, and switching type product/device.

14. The networked appliance (20) according to any of claims 10 to 13, wherein the networked appliance (20) transmits the first type message at least when being initially connected to a network.

15. The networked appliance (20) according to any of claims 10 to 13, wherein the networked appliance transmits the first type message (41) when the status of the networked appliance (20) has changed, a status change including a change in the capability of the networked appliance (20) and, therefore, a change in at least one of the attributes.

16. A computer program in a computer readable format, comprising the software components for performing the method steps according to any of claims 1 to 9 or a non-transitory storage medium storing a computer program in a computer readable format, comprising the software components for performing the method steps according to any of claims 1 to 9.
